# EUROPEAN PATENT APPLICATION

(11) **EP 1 267 502 A2**
(43) Date of publication of application: **18.12.2002**
(21) Application number: 02254044.7
(22) Date of filing: 11.06.2002
(51) Int. Cl.: H04B 7/185

(54) **Method and apparatus for a satellite system with dynamic frequency bandwidth allocation**

(30) Priority: 12.06.2001 US 879523
(71) Applicant: Space Systems / Loral, Inc., Palo Alto, California 94303 (US)
(72) Inventor: Sawdey, James D., Dublin, California 94568 (US); Grybos, David P., San Jose, California 95112 (US)
(74) Representative: Greene, Simon Kenneth

(57) **Abstract**

A flexible bandwidth satellite communications system, having two communications quartets with at least one controller spot beam per quartet. Each quartet comprises four transponders having multiple type bandwidth filters with controllable pass-bands controlled by a gateway located in an opposite quartet.

## Description

### BACKGROUND OF THE INVENTION

### 1. Field of the Invention

The present invention relates to satellite communications and, more particularly, to dynamic frequency bandwidth allocation in satellite communication systems having frequency reuse capability and multiple beams.

### 2. Prior Art

A number of user applications continue to drive the requirement for high speed and high bandwidth data services. Some industry specific examples include remote film editing, medical image transport, financial services, data consolidation, data backup and Internet communications. As business, government and educational institutions disseminate more information, greater importance is attached to data transfer rates and reliable, high speed data services becomes even more critical. In addition, growth in Internet traffic has caused a strain on the capacity of telephony networks. Network shortcomings include network outages, insufficient access bandwidth, insufficient inter-node bandwidth, and poor spectral efficiency. To attempt to overcome these shortcomings, providers are required to make significant investments, as well as experience installation delays, to upgrade network infrastructure.

Corporate LANs/WANs also generate a demand for higher bandwidth. The demand for bandwidth goes up as more and more users are connected. The users, in turn, demand more services and improved network speed. Personal computers are being used to process not only text, but graphics and video as well, all on networks that are increasingly global. High speed networking is also driven by the growth of video distribution, client/server technology, decentralized systems, increased processing power and developments in storage capacity.

While existing satellite systems offer global service, they do not offer direct connection to the end user at moderate to high data rates. Many of the existing fixed satellite service systems employ wide channel bandwidths and relatively large beam-widths making them more suited to point-to-point trunking service rather than to end user connectivity. The wide area coverage, and constrained flexibility of these systems renders these systems both inefficient and costly to serve many small or isolated users.

### SUMMARY OF THE INVENTION

In accordance with one embodiment of the invention a flexible bandwidth satellite communications system is provided. The satellite communications system comprises at least one satellite having at least one controller spot beam and at least two transponders. Each of the transponders comprise at least one communications spot beam and at least one fixed bandwidth filter; at least one fixed bandwidth filter having a controllable pass-band. Each transponder also includes at least one receive antenna; wherein each receive antenna may be adaptable to receiving a polarized space division multiple access signal. Similarly, each transponder includes at least one transmit antenna, adaptable to a multi-mode transmitter operating mode. The satellite communications system also comprises at least one controller gateway not illuminated by either of the at least two communication spot beams. The controller gateway is adaptable to communicating with the satellite via the at least one controller spot beam. The controller gateway is also adaptable to controlling the controllable pass-band of the bandwidth filter.

In accordance with another embodiment the invention includes a method for dynamic frequency bandwidth allocation in a satellite communications system. The method comprises the steps of providing a satellite having frequency reuse capability and equipping the satellite with at least four spot communication beams. Each of the communications beams is associated with a bandwidth filter having controllable pass-band. The method steps also provide a controller gateway to adjust controllable pass-band of each of the bandwidth filters.

Another embodiment of the invention is directed towards an asynchronous bandwidth satellite communications system. The system comprising at least one satellite, wherein the at least one satellite having at least one communications quartet. Each quartet comprises at least four transponders having at least one first bandwidth filter; at least one down-converter connectable to the at least one first bandwidth filter; at least one second bandwidth filter connectable to the at least one down-converter; at least one power amplifier connectable to the at least one second bandwidth filter; and at least one third bandwidth filter connectable to the at least one power amplifier. Each transponder is capable of receiving communications and providing at least one data communications spot beam. Each data communications beam comprises at least one first forward channel assignment and at least one first return channel assignment. In addition, at least one ground control station adaptable to transceiving a data control beam is also provided. The data control beam is adaptable to forming a connection with any one of the at least four transponders within a quartet and also comprises a forward channel and a return channel assignment.

### BRIEF DESCRIPTION OF THE DRAWINGS

The foregoing aspects and other features of the present invention are explained in the following description, taken in connection with the accompanying drawings, wherein:
Figure 1 is a pictorial schematic of a satellite communications system incorporating features of the present invention;
Figure 2 is a pictorial schematic of a quartet service configuration incorporating forward and return link features of the present invention shown in Fig.1;
Figure 3 is a pictorial diagram of user and gateway channel allocations incorporating link spectrum allocation features of the present invention shown in Fig.2;
Fig. 3A is a pictorial schematic of a portion of the quartet shown in Fig. 2 to generate the communications beams shown in Fig. 3;
Figure 4A is a schematic of an initial uplink frequency plan for a frequency reuse system incorporating features of the present invention shown in Fig. 1;
Figure 4B is a schematic of an initial downlink frequency plan for a frequency reuse system incorporating features of the present invention shown in Fig. 1;
Figure 5A is a schematic of one alternate uplink frequency plan for a frequency reuse system incorporating features of the present invention shown in Fig. 1;
Figure 5B is a schematic of an one alternate downlink frequency plan for a frequency reuse system incorporating features of the present invention shown in Fig. 1;
Figure 6 is a schematic diagram of a single quartet configuration of satellite transponders incorporating features of the present invention shown in Fig. 1;
Figures 7A-7B is a schematic diagram of flexible bandwidth filter passbands incorporating features of the present invention shown in Fig. 6;
Figure 7C is a schematic diagram of the comparative frequency spectrum of type 1b and type 1a single channel return filters;
Figure 7D is a schematic diagram of the comparative frequency spectrum of type 2 two channel return filter;
Figure 7E is a schematic diagram of the comparative frequency spectrum of type 3b and type 3a single channel forward filters;
Figure 7F is a schematic diagram of the comparative frequency spectrum of type 4 two channel forward filter;
Figure 8 is a method flowchart incorporating features of the present invention shown in Fig.1.

### DETAILED DESCRIPTION OF THE PREFERRED EMBODIMENT

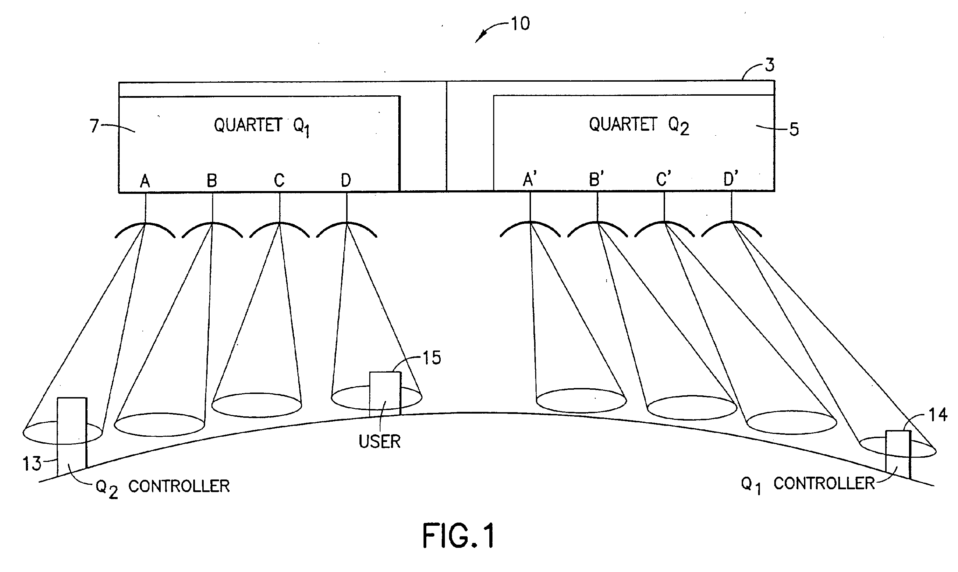

Referring now to Figure 1 there is shown a pictorial schematic of a satellite communications system 10 incorporating features of the present invention. The asynchronous bandwidth satellite communications system 10 comprises the satellite 3 and the ground control stations 13,14. Advantageously the system adjusts bandwidth filter passbands to accommodate asymmetric bandwidth demand between a user 15 and the satellite 3 in the satellite communications system 10. For example, low rate data requests generated by the user 15 generally require less bandwidth than the high data rate requested. Yet, new systems require that the user 15 have the capability to receive higher data rates, thus requiring a wider bandwidth than may be allowed by fixed bandwidth systems. The system 10 can include multiple satellites 3, any suitable number of ground control stations 13,14, and any suitable number of users, 15.

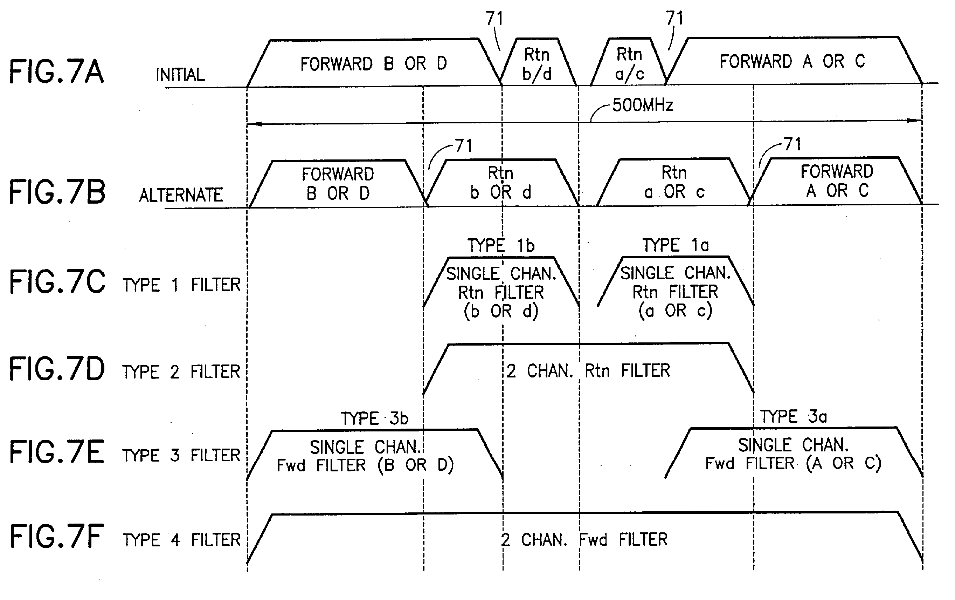

Referring also to Figs. 7A-7B, one feature of the invention provides ground controllers 13,14 to control the position of a guard band 71 between forward and return links; and, in conjunction with single and multiple channel filter types onboard the satellite, the ground controllers control the bandwidth of each link, as required. Thus, low data rate communications, such as cellular service operations from the user 15 to the satellite 3 or ground station may be accommodated with a narrower bandwidth, while high data rate services requiring more bandwidth may be accommodated on the wider bandwidth. When the situation is reversed, i.e., the user's operations demand higher bandwidth, the gateways 13,14 adjusts the guard band 71 to provide the user 15 with a wider portion of the frequency spectrum. It will also be readily appreciated that the ground controller function may be onboard another satellite or space station.

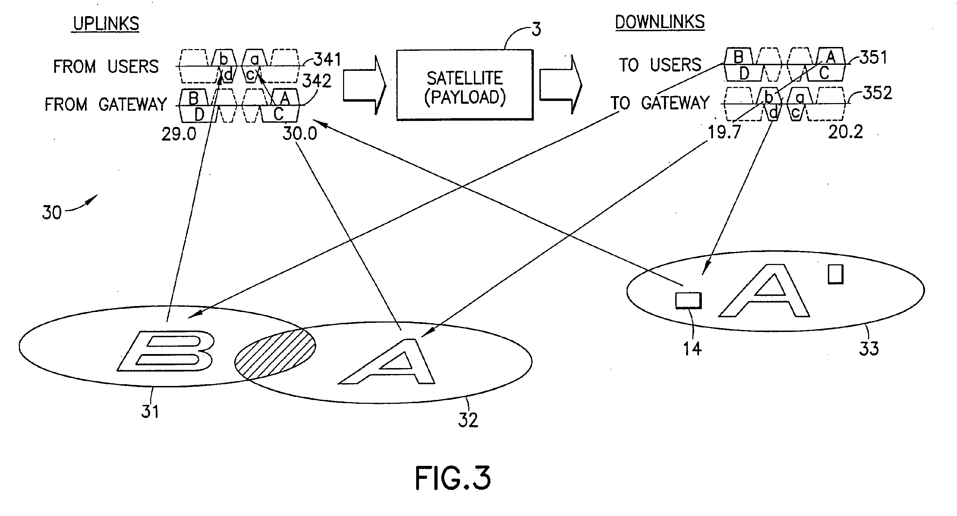

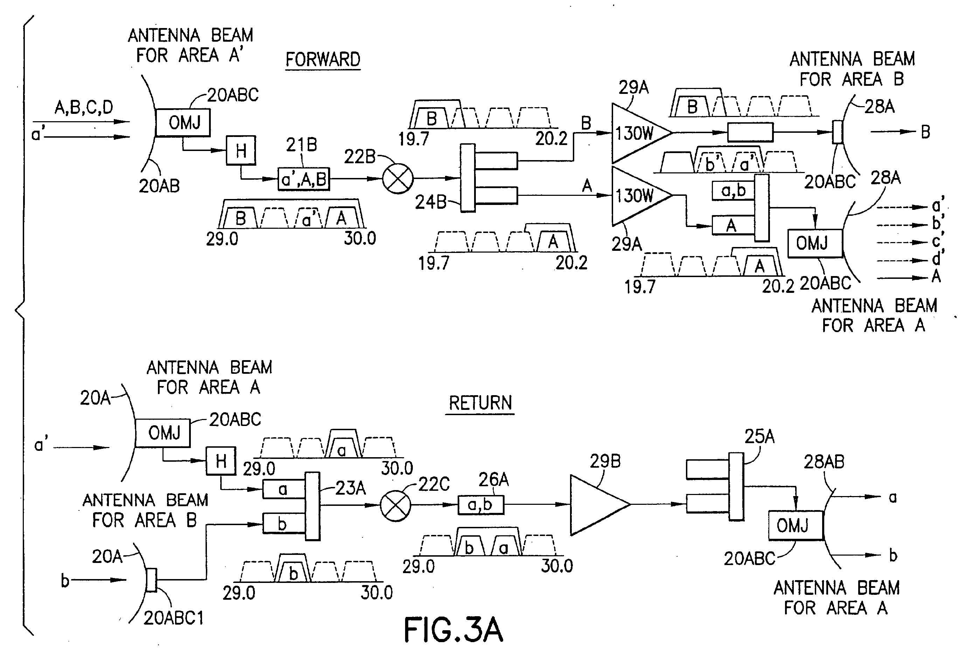

Referring to Figures 1 and 3 there is shown a pictorial diagram of user and gateway channel allocations incorporating link spectrum allocation features of the present invention. The flexible bandwidth satellite communications system 30 comprises at least one satellite 3 having at least two quartets Q1,Q2 having four communications spot beams per quartet as shown in Fig. 1. Referring now to Fig. 3, for clarity, only beams A 32, B 31, and A' 33 are shown. It is readily appreciated that the A 32 and B 31 communications spot beams are associated with a first communication quartet Q1 having four beam capacity; and that beam A' 33 is associated with the second quartet Q2 (not shown in Fig. 3) also having four beam capacity. In an alternate embodiment quartets Q1,Q2 could be used in any type of spacecraft, such as a manned or unmanned shuttle craft. The ground controller 14 for quartet Q1 is located in the spot beam A' 33 generated by quartet Q2. The uplink spectrum 341 shows the user return frequency spectrum plan and the uplink frequency spectrum plan 342 shows the ground controller return frequency spectrum. The solid lines shown in items 341 and 342 represent the portion of the uplink frequency spectrum belonging to the controller and user, respectively. Similarly, 351 represents the downlink frequency spectrum plan for the users in beam A 32 and beam B 31; the downlink spectrum plan is represented by 352 for the ground controller 14 located in the A' beam 33. In an alternate embodiment other suitable frequency bands may be employed for the uplink and downlink

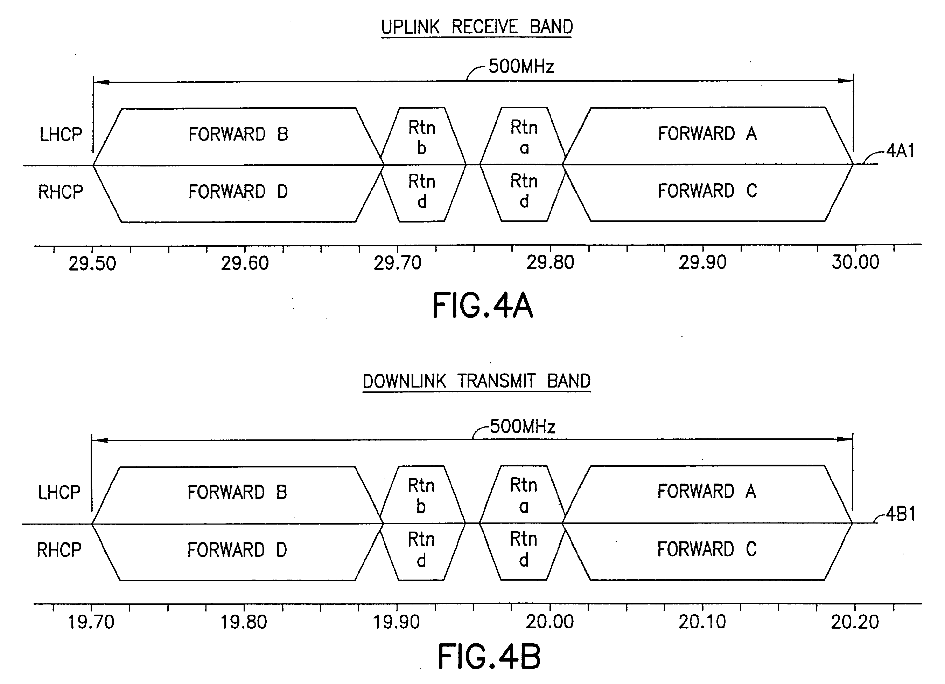

Referring now to Figures 4A and 4B there is shown a schematic of an initial frequency plan for a circular polarization frequency reuse system, with left hand circular polarization (LHCP) and right hand circular polarization (RHCP) incorporating features of the present invention shown in Fig. 1. It will be readily appreciated that in an alternate embodiment any suitable type of signal polarization could be provided. The Forward spectrums A-D in the uplink receive band 4A1 represent the uplink spectrum receivable at the satellite 3 from the controlling gateway 14. The Return spectrums a-d in the uplink receive band 4A1 represent the uplink spectrum receivable at the satellite 3 from the users 15. The downlink transmit band 4B1 shown in Fig. 4B is similar but oppositely arranged. The Forward spectrums A-D shown in 4B1 are from the satellite 3 to the users 15 and the Return spectrums a-d shown in 4B1 are from the satellite 3 to the controlling gateway 14. Arranged in this fashion the controlling gateway 14, located in another quartet as shown in Fig. 1, may determine how much of each spectrum should be allocated to each user and make the spectrum available by adjusting a guard band (Figs. 7A-7B, item 71) between the forward and return channels. In this manner the controlling gateway 14 may determine the uplink and downlink bandwidth of each spectrum allocated to the user.

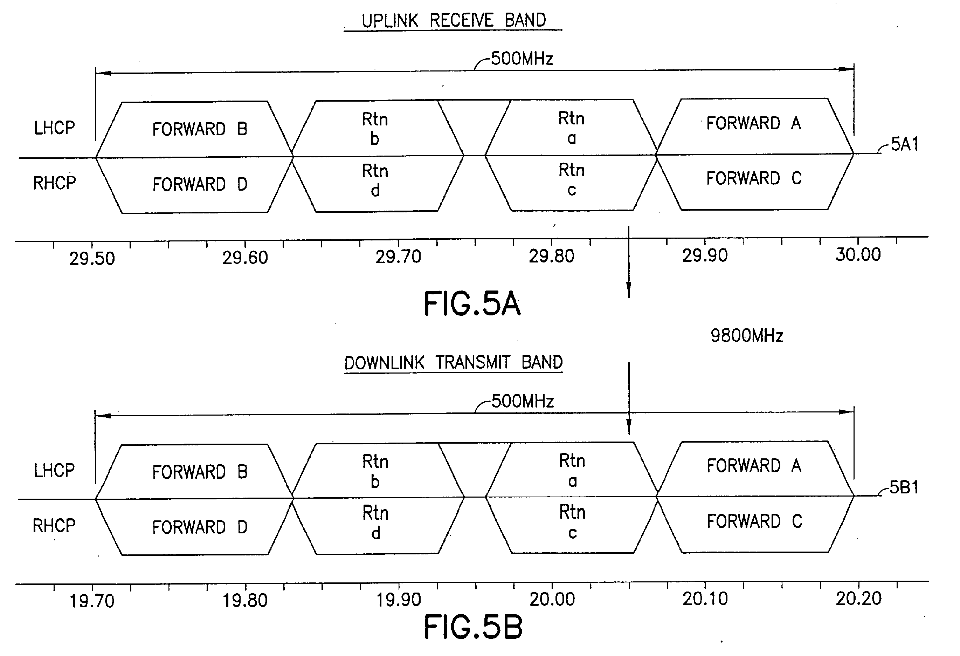

Referring also to Fig. 5A and Fig 5B there is shown a schematic of an uplink receiver frequency plan 5A1 and a downlink transmit frequency plan 5B1, respectively, for a frequency reuse system incorporating features of the present invention shown in Fig. 1. Comparing Fig. 5A and Fig. 5B with Fig. 4A and Fig. 4B, respectively, it is readily apparent that the bandwidth of each Forward and Return channel in the uplink receive and downlink transmit band has been adjusted to accommodate higher return bandwidth requirements. It will also be readily appreciated that alternate embodiments could employ other suitable uplink/downlink frequency bands.

The advantage of controlling the bandwidth from the gateway is readily appreciated since there is no requirement for on-board satellite control or switching; minimizing the number of filters and down converters required for each communications quartet.

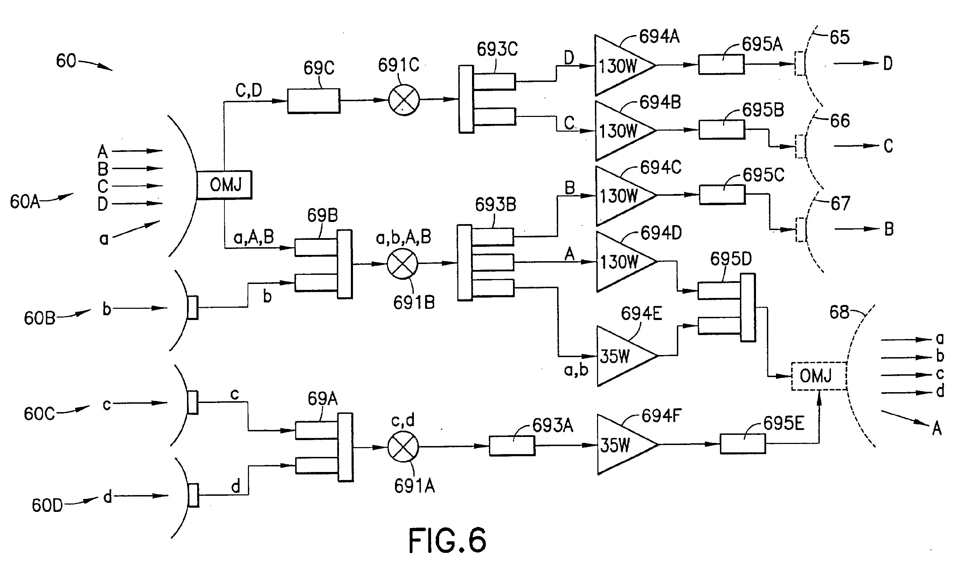

This is illustrated by referring now to Figure 6 where there is shown a schematic diagram of a single quartet configuration of satellite transponders incorporating features of the present invention shown in Fig. 1. Referring also to Figs. 7C-7F where there is shown a schematic diagram of flexible bandwidth filter passbands incorporating features of the present invention shown in Fig. 6.

The quartet 60 represented in Fig. 6 shows at least one satellite transponder per beam. It will be readily appreciated by those skilled in the art that the transponder for each beam is the functional path from the receive antennas 61-64 to the associated transmit antennas 65-68 and that electrical components may be shared between the transponders. In alternate embodiments alternative functional paths using satellite repeaters could be used. Each satellite transponder has at least one bandwidth filter 69A-69B having a controllable pass-band. In addition, each receive and transmit antenna is adaptable to a receiving and transmitting a circular or linear polarized signal, respectively. Each antenna may also be adapted to transmit or receive Space Division Multiple Access signals. In alternate embodiments any suitable type of receiving and transmitting antenna may be used, including antenna fulfilling both functions.

The satellite 3 contains at least one communications transponder quartet 60 having four transponders 60A-60D. The transponder path, from a receiving antenna 61-64 to the associated transmitting antenna 65-68, for each of the four transponders contains a first band width filter 69A-69C, a mixer 691A-691C, a second bandwidth filter 693A-693C, a power amplifier 695A-695E, a third bandwidth filter 695A-695E, and a transmitting antenna 65-68.

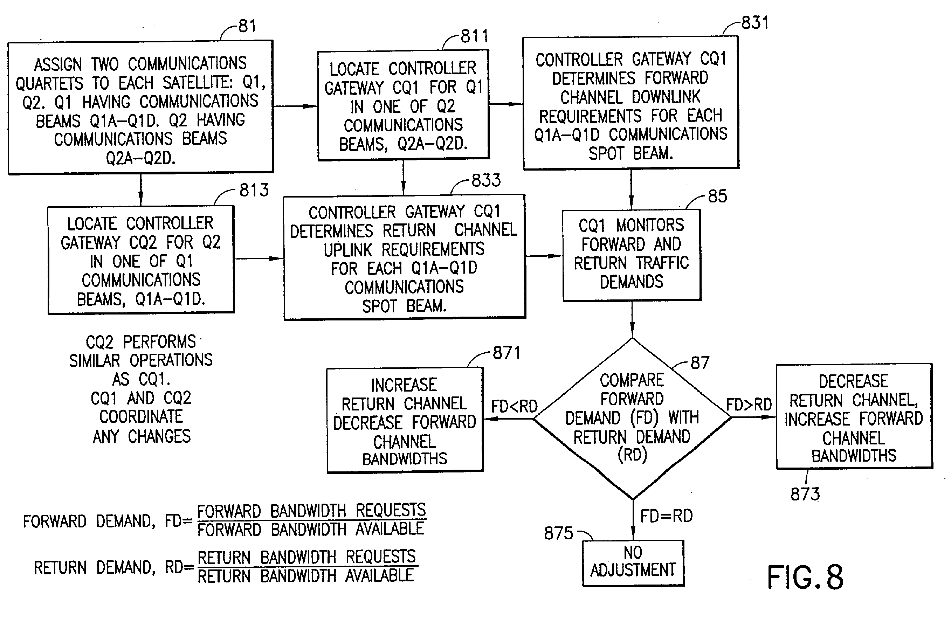

Referring also to Figure 8 there is shown a method flowchart incorporating features of the present invention shown in Fig.1. The method comprises the step 81 of providing a satellite with at least two communication quartets, 'herein referred to as Q1 and Q2. Each of the communication quartets comprise four transponders and each transponder is adaptable for frequency reuse capability and spot beam communications, herein referred to as QnA, where n references the quartet to which the spot beam belongs. The next step 811 locates a controller gateway for each quartet in another quartet's communication spot beam. For example, the controller gateway CQ1 for quartet Q1 is located in one quartet Q2 communication beams, Q2A-Q2D. The next step 813 locates the controller gateway CQ2 in one of quartet Q1 communication beams Q1A-Q1D. Each controller gateway determines the forward and return channel requirements for its respective quartet. For example, controller gateway CQ1 determines the forward channel 831 and return channel 833 requirements for spot beams Q1A-Q1D. The controller gateway continuously monitors 85 the forward and return traffic demands and compares 87 the demands to assigned channel bandwidths. Based on this comparison, the controller gateway increases 871 the return channel bandwidth, decreases 873 the return channel bandwidth or makes 875 no adjustment. It is appreciated that an equal adjust in the forward channel bandwidth is made, either a decrease or increase, respectively. For example, if the controller for a quartet determines 87 that the return channel uplink requirements exceed available return channel capacity then the controller can adjust 871 the guard band between the return channel uplink and the forward channel uplink to provide more return channel uplink capacity (Fig. 5A). It is also readily appreciated that the return channel downlink and the forward channel uplink may be similarly adjusted to meet requirements.

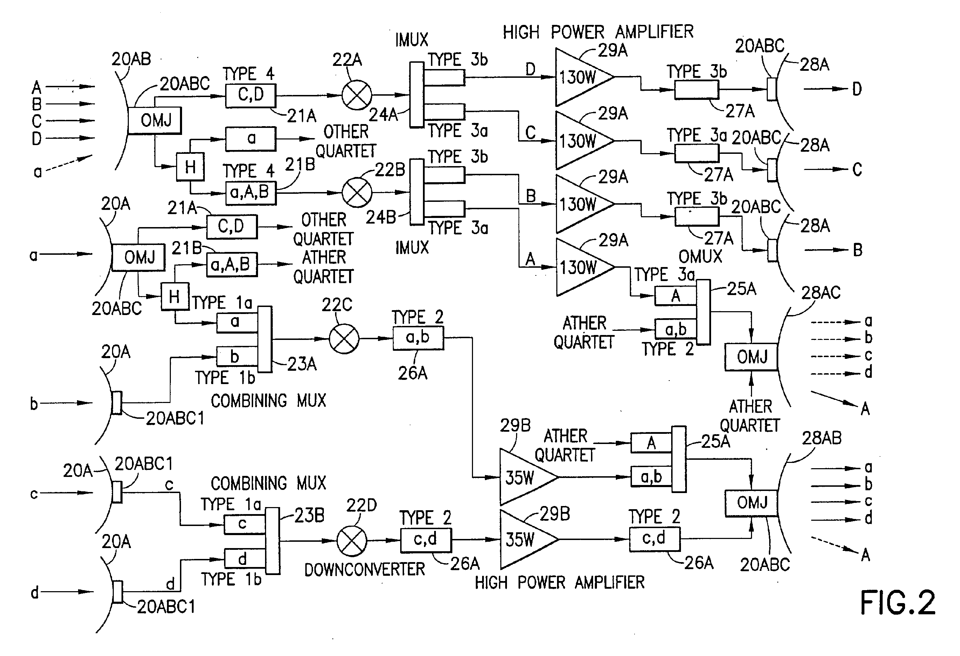

Referring now to Fig. 2 there is shown a diagram of a quartet configuration incorporating features of the present invention as shown Fig. 1 and Figs. 7C-7F. The filters in Fig. 2 are represented by the appropriate filter type with the corresponding frequency span represented in Figs. 7C-7F. For example, a Type 4 filter 21A in Fig. 2 corresponds to the two channel Forward filter frequency spectrum represented in Fig. 7F. In alternate embodiments it will be recognized that other suitable downlink/uplink frequency spectrum could be used. The diagram shown in Fig. 2 represents a full quartet interacting with a portion of another quartet. It will be appreciated that in alternate embodiments the pattern represented in Fig. 2 can be repeated. The full quartet represented in Fig. 2 consists of the five receiving antennas 20A,20AB polarizing devices 20ABC, 20ABC1, multiplexers 23A-23B,25A, mixers 22A-22D, demultiplexers 24A,24B, amplifiers 29A, 29B filters 21A-21B,26A,27A, and transmit antennas 28A,28AB. Receive antenna 20AB and transmit antenna 28AB are the antennas used to communicate with the ground controller (Fig. 3, item 14) associated with the quartet shown. It will be recognized that the dashed lines shown entering antenna 20AB and leaving antenna 28AB represent the uplink and downlink, respectively, for a data communications beam in another quartet; for example, quartet Q2 5 shown in Fig. 1. Multiplexers 24A,24B comprise filter types 3b,3a in the embodiment shown in Fig. 2 but could also, in alternate embodiments, comprise any suitable type of filter. Similarly, multiplexers 23A-23B,25A comprise filter types 1a-1b and type 3a, type 2, respectively but could also comprise any suitable filter type. The power amplifiers 29A, 29B are typically traveling wave tube amplifiers but could, in alternate embodiments, be any suitable type of power amplifier.

Referring also to Fig. 3A there is shown a pictorial schematic of a portion of the quartet shown in Fig. 2. Fig. 3A represents the Forward and Return beams for areas A 32 and B 31 shown in Fig. 3. Also shown in Fig. 3A is the Forward beams from controller 14 and return beams a,b to controller 14 shown in area A' 33.

In relation to the features described above an often disadvantage overcome by the present invention is onboard switching hardware. Typical satellite communications use onboard filter switching or digital processing to accomplish reconfiguring channel bandwidth to accommodate a change in the traffic load in the forward and return directions, i.e., asymmetrical bandwidth. However, the approach of controlling bandwidth on board the satellite requires switching hardware on board the satellite, leading to increased satellite mass as well as an increase in the risk of an unrepairable failure in space. This disadvantage is overcome by the feature of controlling bandwidth from a ground station as described above.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

## Claims

1. A flexible bandwidth satellite communications system, the system comprising:
at least one satellite, the at least one satellite comprising:
at least one controller spot beam;
at least two transponders; wherein the at least two transponders each comprise:
at least one receive antenna, wherein the at least one receive antenna is adaptable to a multi-mode receiver operating mode, wherein the multi-mode receiver operating mode is selected from the receive mode group consisting of:
receiving a polarized signal,
receiving at least one space division multiple access signal (SDMA), and
receiving a polarized signal and receiving at least one SDMA signal;
at least one transmit antenna having at least one communications spot beam; wherein the at least one transmit antenna is adaptable to a multi-mode transmitter operating mode, wherein the multi-mode transmitter operating mode is selected from the transmit mode group consisting of
transmitting a polarized signal,
transmitting at least one SDMA signal, and
transmitting a polarized signal and transmitting at least one SDMA signal;
at least one bandwidth filter connectable between the at least one receive antenna and the at least one transmit antenna, the at least one fixed bandwidth filter having a controllable pass-band;
at least one controller gateway, wherein when the at least one controller ,gateway is not illuminated by either of the at least one communication spot beams the at least one controller gateway is:
adaptable to communicating with the at least one satellite; and
adaptable to controlling the controllable pass-band via said communications.

2. A flexible bandwidth satellite communications system as in claim 1 wherein the receive mode group consisting of receiving the polarized signal further comprises the receive mode group consisting of receiving a vertically polarized signal carrier.

3. A flexible bandwidth satellite communications system as in claim 1 wherein the receive mode group consisting of receiving the polarized signal further comprises the receive mode group consisting of receiving a horizontally polarized signal carrier.

4. A flexible bandwidth satellite communications system as in claim 1 wherein the transmit mode group consisting of transmitting the polarized signal further comprises the transmit mode group consisting of transmitting a vertically polarized signal carrier.

5. A flexible bandwidth satellite communications system as in claim 1 wherein the transmit mode group consisting of transmitting the polarized signal further comprises the transmit mode group consisting of transmitting a horizontally polarized signal carrier.

6. A flexible bandwidth satellite communications system as in claim 1 wherein the at least one bandwidth filter comprises a fixed bandwidth filter.

7. A flexible bandwidth satellite communications system as in claim 1 wherein the at least one controller gateway is located in an area illuminated by the at least one controller spot beam.

8. A flexible bandwidth satellite communications system as in claim 7 wherein the at least one controller gateway is a ground based station.

9. A flexible bandwidth satellite communications system as in claim 7 wherein the at least one controller gateway is a space based station.

10. A method for dynamic frequency bandwidth allocation in a satellite communications system, the method comprising the steps of:
providing a satellite, the satellite having frequency reuse capability, the frequency reuse capability comprising space division multiple access (SDMA) transceiver capability, or signal polarization transceiver capability, or SDMA transceiver capability and signal polarization transceiver capability;
equipping the satellite with at least four spot communication beams;
providing the satellite with at least four bandwidth filters, the at least four bandwidth filters each having a controllable pass-band, and each of the at least four bandwidth filters corresponding to one of the at least four spot communication beams;
providing a controller gateway; and
using the controller gateway to adjust the at least four bandwidth filters.

11. A method as in claim 10 wherein the step of using the controller gateway to adjust the at least four bandwidth filters further comprises the steps of:
providing each of the at least four bandwidth filters with a predetermined maximum bandwidth; and
assigning each of the at least four bandwidth filters a forward and return channel and guard-band, wherein:
the forward channel comprises a portion of a first contiguous frequency spectrum below the guard-band;
the return channel comprises a portion of a second contiguous frequency spectrum above the guard-band; and
the guard-band comprises a portion of a third contiguous frequency spectrum between the first contiguous frequency spectrum and the second contiguous frequency spectrum; or
the return channel comprises a portion of the first contiguous frequency spectrum below the guard-band;
the forward channel comprises a portion of the second contiguous frequency spectrum above the guard-band; and
the guard-band comprises a portion of the third contiguous frequency spectrum between the first contiguous frequency spectrum and the second contiguous frequency spectrum.

12. A method as in claim 11 wherein the step of assigning each of the at least four bandwidth filters a forward and return channel and guard-band further comprises the steps of:
analyzing user data to determine the amount of bandwidth required to transmit and receive data on each forward and return channel;
based upon the result of analyzing user data, adjusting the frequency spectrum of each guard-band, each forward channel, and each return channel; and
transmitting the frequency spectrum each guard-band and each forward and return channel occupies to at least one user.

13. A method as in claim 10 wherein the step of providing a controller gateway further comprises the step of illuminating the controller gateway with a controller spot beam.

14. An asynchronous bandwidth satellite communications system, the system comprising:
at least one satellite, wherein the at least one satellite comprises:
at least one quartet, wherein the at least one quartet comprises:
at least four transponders, wherein each of the four transponders comprise:
at least one first bandwidth filter;
at least one down-converter connectable to the at least one first bandwidth filter;
at least one second bandwidth filter connectable to the at least one down-converter;
at least one power amplifier connectable to the at least one second bandwidth filter; and
at least one third bandwidth filter connectable to the at least one power amplifier;
at least four data communications beams, wherein each data communications beam comprises at least one first forward channel assignment and at least one first return channel assignment;
a data control beam adaptable to forming a connection with any one of the at least four transponders, wherein the data control beam comprises one second forward channel assignment and one second return channel assignment; and
at least one ground control station adaptable to transceiving the data control beam.

15. An asynchronous bandwidth satellite communications system as in claim 14 wherein the at least four transponders comprise at least four transceiving antennas, the at least four transceiving antennas each having spot beam generators.

16. An asynchronous bandwidth satellite communications system as in claim 14 wherein the at least four transponders each comprise:
a receive antenna; and
a transmit antenna connectable to the receive antenna, the transmit antenna having at least one spot beam generator.

17. An asynchronous bandwidth satellite communications system as in claim 16 wherein the receive antenna comprises at least one frequency reuse system.

18. An asynchronous bandwidth satellite communications system as in claim 17 wherein the at least one frequency reuse system comprises at least one spatial frequency reuse system.

19. An asynchronous bandwidth satellite communications system as in claim 17 wherein the at least one frequency reuse system comprises at least one polarization frequency reuse.

20. An asynchronous bandwidth satellite communications system as in claim 19 wherein the at least one polarization frequency reuse system comprises a circular polarization frequency reuse system.

21. An asynchronous bandwidth satellite communications system as in claim 19 wherein the at least one polarization frequency reuse system comprises a linear polarization frequency reuse system.

22. An asynchronous bandwidth satellite communications system as in claim 14 wherein the at least one first bandwidth filter comprises a bandwidth filter selected from the group of a first combining multiplexer or a two-channel forward filter.

23. An asynchronous bandwidth satellite communications system as in claim 22 wherein the first combining multiplexer comprises:
a first single channel return filter; and
a second single channel return filter.

24. An asynchronous bandwidth satellite communications system as in claim 23 wherein the first single channel return filter comprises a first frequency spectrum.

25. An asynchronous bandwidth satellite communications system as in claim 23 wherein the second single channel return filter comprises a second frequency spectrum.

26. An asynchronous bandwidth satellite communications system as in claim 14 wherein the at least one second bandwidth filter comprises a bandwidth filter selected from the group of a first demultiplexer or a two-channel return filter.

27. An asynchronous bandwidth satellite communications system as in claim 26 wherein the first demultiplexer comprises a demultiplexer selected from the group of a first single channel forward filter and a second single channel forward filter or a first single channel forward filter, a second single channel forward filter, and a two channel return filter.

28. An asynchronous bandwidth satellite communications system as in claim 27 wherein the first single channel forward filter comprises a third frequency spectrum.

29. An asynchronous bandwidth satellite communications system as in claim 27 wherein the second single channel forward filter comprises a fourth frequency spectrum.

30. An asynchronous bandwidth satellite communications system as in claim 14 wherein the at least one third bandwidth filter comprises a bandwidth filter selected from the group of a second multiplexer, a two-channel return filter, or a first single channel forward filter.

31. An asynchronous bandwidth satellite communications system as in claim 30 wherein the second multiplexer comprises:
the first single channel forward filter; and
the first two-channel return filter.

32. An asynchronous bandwidth satellite communications system as in claim 31 wherein the first single channel forward filter comprises a fifth frequency spectrum.

33. An asynchronous bandwidth satellite communications system as in claim 31 wherein the first two-channel return filter comprises a sixth frequency spectrum.

34. An asynchronous bandwidth satellite communications system as in claim 14 wherein the at least one power amplifier further comprises at least one traveling wave tube amplifier.

35. An asynchronous bandwidth satellite communications system as in claim 14 wherein the at least one ground control station further comprises at least one satellite transponder guard-band controller.

36. A satellite for a flexible bandwidth satellite communications system including at least one controller gateway, the satellite comprising:
at least one controller spot beam;
at least two transponders; wherein the at least two transponders each comprise:
at least one receive antenna, wherein the at least one receive antenna is adaptable to a multi-mode receiver operating mode, wherein the multi-mode receiver operating mode is selected from the receive mode group consisting of:
receiving a polarized signal,
receiving at least one space division multiple access signal (SDMA), and
receiving a polarized signal and
receiving at least one SDMA signal;
at least one transmit antenna having at least one communications spot beam; wherein the at least one transmit antenna is adaptable to a multi-mode transmitter operating mode, wherein the multi-mode transmitter operating mode is selected from the transmit mode group consisting of
transmitting a polarized signal,
transmitting at least one SDMA signal, and
transmitting a polarized signal and
transmitting at least one SDMA signal;
at least one bandwidth filter connectable between the at least one receive antenna and the at least one transmit antenna, the at least one fixed bandwidth filter having a controllable pass-band.

37. A controller gateway for use in a satellite communications system including a satellite, the controller gateway including code for controlling the satellite communications system to carry out a method as set out in any of claims 10 to 13.
